# FASCICULE DE BREVET EUROPEEN

(11) **EP 0 914 304 B1**
(45) Date de publication et mention de la délivrance du brevet: **18.02.2004**
(21) Numéro de dépôt: 98925702.7
(22) Date de dépôt: 14.05.1998
(51) Int. Cl.: C03C 25/26, C03C 25/10

(54) **PROCEDE DE PRODUCTION DE FILS DE VERRE ENSIMES**
VERFAHREN ZUR HERSTELLUNG VON BESCHICHTETEN GLASFASERN
METHOD FOR PRODUCING SIZED GLASS FIBRES

(30) Priorité: 14.05.1997 FR 9705926
(43) Date de publication de la demande: 12.05.1999
(73) Titulaire: Saint-Gobain Vetrotex France S.A., 73000 Chambéry (FR)
(72) Inventeur: MOIREAU, Patrick, F-73190 Curienne (FR); GIBELLO, Bruno, F-73000 Chambéry (FR); ROUBIN, Marc, F-73000 Chambéry (FR)
(74) Mandataire: Goldenberg, Virginie Isabelle
(86) Numéro de dépôt international: PCT/FR1998/000953
(87) Numéro de publication internationale: WO 1998/051633

(56) Documents cités:
- WO-A-96/18683
- FR-A- 2 279 120
- US-A- 3 505 279
- US-A- 4 867 775

## Description

Dans le domaine des fibres de renforcement et des composites, la présente invention concerne un procédé de production de fils de verre ensimés ainsi que les fils obtenus et les composites réalisés à partir desdits fils.

La fabrication de fils de verre de renforcement se fait de facon connue à partir de filets de verre fondu s'écoulant des orifices de filières. Ces filets sont étirés sous forme de filaments continus, puis ces filaments sont rassemblés en fils de base, lesquels sont ensuite collectés.

Avant leur rassemblement sous forme de fils, les filaments sont habituellement revêtus d'une composition d'ensimage par passage sur un organe ensimeur. Ce dépôt d'ensimage est très important : d'une part, il permet l'obtention des fils, d'autre part, il permet à ces fils d'être utilisés efficacement dans la réalisation de composites. L'ensimage a en effet les fonctions habituelles suivantes : il protège les fils de l'abrasion et évite ainsi leur casse pendant leur fabrication et, éventuellement, pendant leur utilisation; il permet de plus l'association des fils réalisés avec des matières organiques et/ou inorganiques à renforcer, en facilitant, notamment, le mouillage et/ou l'imprégnation des fils par ces matières. Dans la plupart des cas, l'ensimage favorise également l'adhésion entre le verre et la matière à renforcer et permet l'obtention de composites présentant des propriétés mécaniques améliorées. De tels composites sont décrits dans le document WO 96/18683.

Il est donc important que le dépôt d'ensimage s'opère efficacement et dans les meilleures conditions possibles, de façon à ce que l'ensimage puisse remplir correctement ses fonctions.

Les ensimages les plus couramment utilisés sont des ensimages aqueux (à plus de 85 % en poids d'eau) faciles à déposer, l'eau étant ensuite éliminée par séchage. Les compositions d'ensimage sont normalement choisies de façon à ne pas subir de réactions chimiques à température ambiante (pendant leur stockage) et sous filière (une polymérisation de l'ensimage, par exemple, rendant le dépôt de celui-ci impossible). Par contre, elles peuvent éventuellement être choisies pour polymériser sous l'effet d'un traitement postérieur au dépôt sur les filaments. Il s'agit en général d'un traitement thermique à une température supérieure à 100°C effectué après collecte des fils. Cette polymérisation de l'ensimage permet d'obtenir des fils intègres (dont les filaments sont solidaires les uns des autres) manipulables, cette intégrité étant notamment recherchée dans les applications textiles où les fils sont soumis à de fortes contraintes mécaniques.

Chaque traitement supplémentaire des fils ensimés, notamment chaque traitement consommateur d'énergie, entraînant un coût supplémentaire au niveau du procédé de fabrication des fils et pouvant générer des défauts sur les fils obtenus (problèmes de migration des composants de l'ensimage sur un enroulement de fils traités thermiquement, par exemple), il est économiquement avantageux de trouver des moyens de réduire l'importance ou le nombre de ces traitements.

Or, il n'existe pas à l'heure actuelle de procédé à la fois très économique (dans la mesure notamment où il ne nécessite pas de traitement énergétique coûteux des fils ensimés pendant leur fabrication) et permettant d'obtenir, avec de bons rendements (en particulier à des vitesses élevées, avec un taux limité de casses et sans variation de la qualité des fils obligeant à une élimination d'une partie des produits), toute une gamme de fils ensimés pour diverses applications, ces fils ensimés présentant un revêtement et des caractéristiques uniformes sur toute leur longueur.

La présente invention a donc pour but de fournir un procédé de production de fils de verre ensimés de qualité constante avec un rendement avantageux, ce procédé étant à la fois économique et offrant les meilleures conditions possibles de revêtement des fils. La présente invention a également pour but de fournir un procédé permettant d'obtenir avec ces mêmes avantages toute une gamme de fils de verre utilisables dans des applications variées. La présente invention a également pour objet d'obtenir des fils directement manipulables et utilisables pour réaliser des composites et présentant un revêtement uniforme sur toute leur longueur.

Ce but est atteint par le procédé selon l'invention dans lequel les conditions nécessaires à l'obtention des fils recherchés avec les avantages précédemment décrits sont définies. Dans ce procédé, on étire des filets de verre fondu, s'écoulant d'orifices disposés à la base d'une ou plusieurs filières, sous la forme d'une ou plusieurs nappes de filaments continus, puis on rassemble les filaments en un ou plusieurs fils que l'on collecte sur un ou plusieurs support(s) en mouvement, ce procédé consistant à déposer une première composition stable, présentant une viscosité comprise entre 0.5 et 250 cP, à la surface des filaments, à déposer au moins une seconde composition stable amenée séparément de la première et présentant une viscosité comprise entre 0.5 et 300 cP à la surface des filaments ou du (des) fil(s), au plus tôt lors du dépôt de la première composition et au plus tard lors de la collecte du (des) fil(s), l'écart de viscosité entre les compositions déposées étant inférieur à 150 cP, le mélange des compositions déposées présentant en outre les fonctions d'une composition d'ensimage et étant apte à polymériser à température ambiante sans apport d'énergie supplémentaire à des températures inférieures à 60°C.

Le procédé selon l'invention présente plusieurs avantages : il permet en premier lieu de supprimer les traitements (thermiques ou par irradiation) habituellement utilisés pour polymériser les compositions d'ensimage sur les fils de verre, ce qui représente une économie importante. De la même façon, il évite le traitement de certains effluents, le dégagement d'effluents étant généralement lié aux traitements thermiques de polymérisation effectués. Le procédé selon l'invention présente une productivité améliorée, les fils obtenus étant notamment de qualité uniforme sur toute leur longueur. De plus, il permet une meilleure maîtrise des réactions de polymérisation de l'ensimage effectuées sur les fils et limite les risques de casses de ces fils. Ce procédé réduit également les risques de migration irrégulière de composants de l'ensimage sur le fil et/ou les risques de coloration des fils ou de déformation des enroulements liés à certains traitements des fils (tels que le séchage). Par ailleurs, le procédé s'applique avec les mêmes avantages à la réalisation de différents types de fils ensimés en vue de diverses applications. Il permet aussi d'obtenir des fils revêtus de compositions nouvelles, à base de systèmes n'existant pas dans les ensimages actuels du fait de leur réactivité et instabilité. Le procédé selon l'invention permet donc d'élargir de façon considérable le domaine des ensimages et ouvre la voie à de nouveaux produits et à de nouvelles applications.

Par « fils de verre », on entend, des fils à base de verre, c'est-à-dire non seulement des fils formés uniquement de filaments de verre mais également des fils formés de filaments de verre et de filaments organiques, notamment de filaments thermoplastiques. Dans ce dernier cas, pendant l'étirage des filaments de verre, on extrude et on entraîne simultanément les filaments organiques (ou on amène simultanément les fils organiques issus par exemple d'enroulements), les trajets suivis par les filaments de verre et les filaments (ou fils) organiques convergeant l'un vers l'autre avant que lesdits filaments soient rassemblés en au moins un fil composite entraîné mécaniquement.

Les filaments de verre peuvent être étirés sous forme d'une nappe à partir d'une filière ou sous forme de plusieurs nappes à partir d'une ou plusieurs filières et peuvent être rassemblés en un ou plusieurs fils. La vitesse d'étirage des filaments de verre dans le procédé selon l'invention est généralement comprise entre 8 et 75 m/s, le plus souvent entre 10 et 60 m/s. De façon générale et préférentiellement selon l'invention, le dépôt des compositions (en particulier de la première composition) se fait sur les filaments refroidis à une température inférieure à 90°C, avantageusement inférieure à 75°C, pour éviter des risques d'évaporation sélective de composants des compositions déposées et permettre de mieux contrôler ce qui est déposé sur les filaments.

Eventuellement, le refroidissement des filaments peut être accéléré à l'aide d'un dispositif de projection d'un fluide de refroidissement. Si nécessaire, ce fluide peut être éliminé avant le dépôt de la première composition.

Le dépôt de la première composition se fait en cours d'étirage au plus tard lors du rassemblement des filaments en fil(s) et de préférence avant le rassemblement des filaments en fil(s) afin d'éviter une casse des filaments frottant sur l'organe de rassemblement et afin d'obtenir une répartition de la première composition sur l'ensemble des filaments. Le revêtement peut se faire par exemple à l'aide d'un rouleau, à l'aide d'un pulvérisateur, à l'aide d'un dispositif faisant également office d'organe de rassemblement...ou peut se faire également par l'intermédiaire d'autres fils ou filaments revêtus de la première composition et mis au contact des filaments de verre dans le cas par exemple de la réalisation de fils composites.

De préférence, la seconde composition est également déposée sur les filaments au plus tard lors du rassemblement des filaments en fils. Le dépôt de cette composition peut aussi se faire à l'aide d'un rouleau, à l'aide d'un pulvérisateur, à l'aide d'un dispositif faisant également office d'organe de rassemblement...ou peut se faire par l'intermédiaire d'autres fils ou filaments revêtus de cette composition et mis au contact des filaments de verre, auquel cas la première composition est préférentiellement déposée directement sur les filaments de verre au moins, avant association avec les autres fils ou filaments.

Par « au plus tôt lors du dépôt de la première composition », on entend, selon l'invention, que les compositions sont mélangées juste avant (dans les quelques secondes, voire dans la seconde précédant le dépôt) leur dépôt conjoint sur les filaments ou sont mélangées sur les filaments ou fil(s). Dans ce dernier cas, chaque composition est généralement déposée sur les filaments ou fil(s) à l'aide d'un moyen de dépôt qui lui est propre (au moins deux moyens de dépôt distincts étant dans ce cas nécessaires, ces deux moyens étant placés du même côté des filaments ou fil(s) ou de part et d'autre des filaments ou fil(s)) et le mélange des compositions se fait par interdiffusion (diffusion des compositions l'une dans l'autre) à la surface des filaments. Il peut aussi être avantageux d'utiliser un seul dispositif pour déposer les deux compositions, les deux compositions étant alors amenées séparément et le mélange des compositions se faisant dans ce cas au niveau du dispositif, éventuellement au niveau des filaments, voire juste avant (dans les quelques secondes, voire dans la seconde avant) l'introduction dans le dispositif de dépôt. Cet unique dispositif de dépôt peut être un dispositif d'application à distance (pulvérisateur) ou par contact, ce dernier type de dispositif présentant l'avantage de permettre un meilleur contrôle des quantités déposées sur les filaments. Dans ce dernier cas, il est important que les compositions soient intégralement déposées sur les filaments après leur mise au contact dans le dispositif, ce qui est rendu possible par le choix notamment des quantités de composition déposées (ces quantités étant précisées ultérieurement dans un mode de réalisation préféré de l'invention).

Il est clair que la présente invention est décrite en se basant sur le dépôt de deux compositions distinctes mais qu'elle s'applique également dans le cas du dépôt d'un nombre de compositions supérieur. Dans ce cas, chaque composition supplémentaire est préférentiellement définie sur le modèle de la deuxième composition, c'est-à-dire que chaque composition est stable et amenée séparément, que chaque composition supplémentaire présente une viscosité comprise entre 0.5 et 300 cP et que chaque composition supplémentaire est déposée au plus tôt lors du dépôt de la première composition et au plus tard lors de la collecte du (des) fil(s). De plus, conformément à la définition générale, l'écart de viscosité entre les compositions (par exemple entre la première et chacune des compositions ultérieurement déposées avant collecte) doit être inférieur à 150 cP, le mélange des compositions présentant en outre les fonctions d'une composition d'ensimage et étant apte à polymériser à température ambiante. Il est utile de préciser, à ce propos, que, dans la définition générale, le « mélange des compositions » fait référence au mélange de l'ensemble des compositions déposées sur le(s) fil(s) avant la fin de la collecte (et non nécessairement au mélange des deux premières compositions déposées dans le cas du dépôt d'un nombre de compositions supérieur à deux).

Par « composition stable », on entend principalement « composition ne polymérisant pas sans l'apport d'au moins un autre composant », cette composition pouvant dans de nombreux cas être conservée pendant plusieurs jours, à des températures de stockage pouvant aller jusqu'à 40 ou 50°C.

Chacune des compositions déposées peut être choisie parmi des compositions aqueuses, anhydres, ou à faible taux de solvant. De préférence, on utilise des compositions comprenant moins de 5 % en poids de solvant (c'est-à-dire de composés jouant uniquement un rôle de solvant), voire totalement dénuées de solvant. Les solvants éventuels sont essentiellement des solvants organiques nécessaires à la mise en solution de certains composés. L'absence ou la présence limitée de solvants permet d'éviter tous les problèmes liés à la présence d'eau (problèmes de séchage) ou de solvants organiques (problèmes de toxicité des solvants notamment) sur les fils. Les compositions se présentent en général sous forme de solutions au moins partiellement miscibles et de préférence miscibles (il est cependant possible, pour certaines applications particulières, que l'une au moins des compositions formant le mélange se présente sous forme d'une dispersion - émulsion, suspension - ou ne soit pas miscible avec une ou d'autres compositions formant le mélange).

La viscosité des compositions est particulièrement importante pour garantir un bon dépôt des compositions, et tout particulièrement la différence de viscosité entre les compositions. Si la différence de viscosité excède 150 cP, les fils obtenus présentent un revêtement insuffisamment uniforme. De préférence et en règle générale si l'écart de viscosité est important, la première composition déposée présente la viscosité la plus faible parmi les compositions déposées. La différence de viscosité est de préférence inférieure à 135 cP et peut être nulle. La différence de viscosité est de préférence d'autant plus faible que les compositions mélangées sont moins miscibles. La viscosité est évaluée à la température de dépôt des compositions, cette température étant généralement comprise entre 20 et 70°C, et le plus souvent entre 30 et 60°C.

De préférence, la première composition présente une viscosité (au moment du dépôt) comprise entre 1 et 200 cP (de façon particulièrement préférée entre 1 et 150 cP) et la seconde composition (ou les suivantes) présente(nt) une viscosité (au moment du dépôt) comprise entre 1 et 250 cP (de façon particulièrement préférée entre 1 et 200 cP). De préférence, lorsque l'une ou plusieurs des compositions utilisées présente(nt) un taux de solvant inférieur à 5 %, la viscosité de cette (ces) composition(s) est comprise entre 10 et 250 cP (préférentiellement entre 20 et 150 cP) pour la première composition et entre 10 et 300 cP (préférentiellement entre 20 et 200 cP) pour les compositions suivantes. Dans le cas de l'utilisation d'une ou plusieurs compositions aqueuses, la viscosité est comprise entre 1 et 25 cP pour la première composition et est comprise entre 1 et 50 cP pour les compositions suivantes.

Le taux des compositions déposé présente également, dans de nombreux cas, une importance en combinaison avec les autres caractéristiques du procédé selon l'invention. Le respect des taux indiqués ci-après permet notamment d'éviter, dans certains cas, une polymérisation non maîtrisée et/ou éventuellement non uniforme du mélange sur les fils et permet d'éviter des phénomènes de pollution des moyens de dépôt d'une composition par une autre composition lorsque l'on utilise des dispositifs de dépôt par contact situés l'un à la suite de l'autre, ces phénomènes entraînant notamment des casses de fils (de tels phénomènes étant d'autant plus importants que la vitesse d'étirage est élevée et étant inévitables à des taux plus élevés lorsque, par exemple, on veut faire directement des preimprégnés). Ainsi, de préférence et en régle générale selon l'invention, le taux de chaque composition déposée représente en poids, hors solvant (c'est-à-dire si l'on élimine les solvants éventuels), de 0.1 à 2 % du poids des filaments, de façon particulièrement préférée de 0.2 à 1.5 % du poids des filaments. De préférence également, la perte au feu des fils obtenus (revêtus de l'ensemble des compositions) est inférieure à 3 % en poids.

En règle générale, lorsque l'on utilise une (des) composition(s) présentant moins de 5 % en poids de solvant, le taux de cette (ces) composition(s) (solvant(s) compris) déposé sur les filaments est compris approximativement entre 0.1 et 2 % en poids des filaments et dans le cas d'une ou plusieurs compositions aqueuses, le taux de cette (ces) composition(s) (solvant(s) compris) est plutôt compris entre 1 et 15 % en poids des filaments.

Lorsque le mélange revêtant les fils est uniquement constitué d'une première composition et d'une seconde composition, le rapport des taux en poids de chacune de ces compositions sur les filaments ou fils (le(s) solvant(s) éventuel(s) étant dans ce cas pris en compte dans l'évaluation des taux) est aussi, de préférence, compris entre 1/10 et 10 (c'est-à-dire que la première composition représente approximativement de 9 à 91 % en poids du mélange déposé sur les filaments). De façon particulièrement préférée, principalement dans le cas où les compositions présentent moins de 5 % en poids de solvant, ce rapport est compris entre 1/3 et 3 (c'est-à-dire que la première composition représente de 25 à 75 % en poids du mélange déposé sur les filaments) pour permettre une bonne interdiffusion des compositions l'une dans l'autre. De façon plus générale, quel que soit le nombre de compositions déposées sur les filaments, ces compositions sont préférentiellement déposées dans des quantités proches les unes des autres.

Les compositions sont choisies de façon à polymériser, après leur mélange, sur les filaments ou fils et sont préférentiellement choisies de façon à ce que la polymérisation du mélange à température ambiante ait lieu au moins à 80 % (c'est-à-dire au moins à 80 % du taux de conversion attendu) en moins de 80 heures et, de préférence, en moins de 50 heures après dépôt et mélange des compositions, en particulier après dépôt et mélange des compositions réactives (comprenant un ou des composants susceptibles d'intervenir dans la réaction de polymérisation du mélange), sur les filaments. Les fils ainsi obtenus sont aisément manipulables et ne posent pas de problèmes de mise en oeuvre ultérieurs.

Dans la présente invention, par « polymérisation », « polymériser »... on entend « polymérisation et/ou réticulation », « polymériser et/ou réticuler ».... De même, par « mélange apte à polymériser » ou « compositions choisies de façon à polymériser après leur mélange », on entend que le mélange des compositions comprend un ou des constituants aptes à polymériser dans le mélange et par « polymérisation du mélange » on entend polymérisation de ce(s) constituant(s) apte(s) à polymériser dans le mélange et non nécessairement polymérisation de tous les constituants du mélange. Par ailleurs, le terme « température ambiante » signifie également, dans le procédé selon l'invention, « sans apport d'énergie supplémentaire » et couvre une plage de températures inférieures à 60°C, généralement de 15 à 45°C.

La polymérisation du mélange est amorcée au plus tôt lors du mélange d'au moins deux compositions réactives et au plus tard lors de la collecte des fils.

Les compositions sont également choisies de façon à ce que leur mélange présente les caractéristiques et fonctions essentielles d'une composition d'ensimage (protection des fils contre l'abrasion, amélioration du mouillage et/ou de l'imprégnation des fils par la matière à renforcer et/ou de l'adhésion du verre à cette matière, etc.). Le « mélange » formé d'au moins deux compositions mentionné dans la présente invention peut ainsi également être désigné par « composition d'ensimage ».

Le mélange de compositions présent sur les fils ensimés comprend au moins un système de base polymérisable à température ambiante. Par « mélange comprenant » ou par « composition comprenant » on entend selon l'invention « mélange (respectivement composition) dont un des constituants initiaux est... », indépendamment de l'évolution de ce constituant au sein du mélange (respectivement de la composition). Par « système de base », on entend le ou les composés indispensables à l'ensimage et aptes à polymériser dans l'ensimage, ce(s) composé(s) participant à la structure de l'ensimage polymérisé. En règle générale, le système de base représente au moins 40 %, généralement au moins 55 % et, dans la plupart des cas au moins 60 % (voire au moins 65 %) en poids de « l'extrait sec » du mélange (ou du mélange dans lequel le(s) solvant(s) éventuel(s) a (ont) été retiré(s)). Le système de base peut représenter jusqu'à 100 % en poids de l'extrait sec mais n'excède généralement pas 95 % et, dans la plupart des cas, 90 % (voire 85 %) en poids de l'extrait sec du mélange. La proportion du système de base augmente généralement avec l'intégrité recherchée.

Le système de base comprend au moins un groupe de composant(s) susceptible(s) d'homopolymériser à température ambiante et/ou comprend au moins deux groupes de composant(s), les composants des deux groupes étant susceptibles de copolymériser à température ambiante. Par « groupe de composant(s) », on entend par extension, selon l'invention, un composant ou plusieurs composants de même réactivité. Par « même réactivité », on entend « même aptitude à polymériser avec ou en présence de certains composants (du mélange) ou de certaines fonctions (de composant(s) du mélange). Les composants de même réactivité peuvent se subdiviser en un ou plusieurs sous-groupes, le(s) composant(s) de chaque sous-groupe présentant au moins une fonction réactive (susceptible d'intervenir dans la réaction de polymérisation du mélange) commune (en commun).

De préférence, le système de base comprend principalement un groupe de composant(s) susceptible(s) d'homopolymériser à température ambiante ou deux groupes de composant(s) susceptible(s) de polymériser (homopolymériser ou copolymériser) à température ambiante, ce(s) groupe(s) représentant au moins 60 % en poids, de préférence au moins 80 % en poids et jusqu'à 100 % en poids dans la majorité des cas, du système de base.

De préférence, le système de base comprend au moins deux groupes de composant(s) (susceptibles d'homopolymériser ou de copolymériser), les deux groupes provenant respectivement de compositions distinctes déposées sur le fil.

Par ailleurs, de façon préférée selon l'invention, principalement dans le cas où le mélange comprend moins de 5 % en poids de solvant, le système de base comprend au moins 60 % en poids (de façon particulièrement préférée au moins 75 % en poids et jusqu'à 100 % dans la majorité des cas) de composant(s) de masse moléculaire inférieure à 750 (de façon particulièrement préférée inférieure à 500). Dans la plupart des cas selon l'invention et de façon préférée, ces composants de masse moléculaire inférieure à 750 sont des monomères (mono ou polyfonctionnels) mais le système de base peut également comprendre un (des) composant(s) de masse moléculaire inférieure à 750 sous forme d'oligomère(s) ou de polymère(s) à fonctions partiellement polymérisées.

Selon un mode de réalisation de l'invention, le mélange de compositions déposées sur les filaments comprend, en plus du système de base, au moins un catalyseur (ou accélérateur ou amorceur) favorisant la polymérisation de tout ou partie du (des) composant(s) du système de base. Le taux de catalyseur(s) au sein du mélange des compositions est généralement inférieur à 5 % en poids du mélange et, de préférence, est inférieur à 3 % en poids du mélange.

En règle générale, chaque composant réactif du mélange est apporté par une composition distincte de celle(s) apportant le(s) composant(s) susceptible(s) de réagir avec ledit composant ou provoquant la réaction dudit composant. On peut cependant envisager d'apporter dans une même composition des composants devant réagir ensemble ou devant réagir pour une partie d'entre eux en présence de l'autre partie, si une partie des composants est bloquée de façon à empêcher la réaction spontanée. Dans ce cas, on apporte dans une autre composition au moins un agent débloquant permettant de déclencher la réaction de polymérisation.

Avantageusement, une majorité de composant(s) (au moins 50 %) du système de base apporté(s) par l'une des compositions réactives est au moins partiellement miscible avec le(s) composition(s) comprenant le(s) composant(s) devant polymériser avec ce(s) composant(s) et/ou devant favoriser la polymérisation de ce(s) composants.

Selon un mode de réalisation préféré de la présente invention, le mélange comprend au moins un système de base, ce système comprenant au moins un premier groupe de composant(s) susceptible(s) d'homopolymériser à température ambiante et au moins un second groupe de composant(s) susceptible(s) d'homopolymériser à température ambiante, le mélange comprenant en outre au moins un premier amorceur favorisant l'homopolymérisation des composants du premier groupe et au moins un second amorceur favorisant l'homopolymérisation des composants du second groupe. Le premier groupe de composant(s) est apporté par au moins l'une des compositions, par exemple la première composition et le second groupe de composant(s) est préférentiellement apporté par une ou plusieurs compositions distinctes de celle(s) apportant le premier groupe, par exemple par la seconde composition. De même, le premier amorceur est préférentiellement apporté par une ou plusieurs compositions distinctes de celle(s) apportant le premier groupe, par exemple par la seconde composition et le second amorceur est préférentiellement apporté par une ou plusieurs compositions distinctes de celle(s) apportant le second groupe, par exemple par la première composition.

A titre d'exemple non exhaustif, le premier groupe peut être constitué, dans le mode de réalisation précédent, par un ou plusieurs composants choisis parmi les composants présentant au moins une fonction réactive époxy, le second groupe peut être constitué par un ou plusieurs composants choisis parmi les composants présentant au moins une fonction réactive (méth)acrylique, le premier amorceur peut être constitué par un ou plusieurs composants choisis parmi les acides de Lewis et les bases de Lewis et le second amorceur peut être constitué par un ou plusieurs peroxydes, les composants (et les amorceurs) étant choisis suffisamment réactifs pour obtenir une polymérisation à température ambiante.

Selon un autre mode de réalisation particulièrement préféré de la présente invention, le mélange comprend au moins un système de base, ce système comprenant au moins un premier groupe de composant(s) et au moins un second groupe de composant(s) susceptible(s) de copolymériser à température ambiante avec le(s) composant(s) du premier groupe. Le premier groupe de composant(s) est apporté par au moins l'une des compositions, par exemple la première composition et le second groupe de composant(s) est préférentiellement apporté par une ou plusieurs compositions distinctes de celle(s) apportant le premier groupe, par exemple par la seconde composition. Eventuellement, le mélange comprend également au moins un catalyseur ou amorceur favorisant la réaction de copolymérisation, ce catalyseur étant apporté par l'une quelconque des compositions.

A titre d'exemple non exhaustif, le premier groupe peut être constitué, dans le mode de réalisation précédent, par un ou plusieurs composants choisis parmi les composants présentant au moins une fonction réactive époxy et le second groupe peut être constitué par un ou plusieurs composants choisis parmi les composants présentant au moins une fonction réactive amine ou parmi les composants présentant au moins une fonction réactive anhydride, le(s) catalyseur(s) éventuel(s) pouvant être choisi(s) notamment parmi les amines tertiaires, les composants étant choisis suffisamment réactifs pour obtenir une polymérisation à température ambiante.

Le choix du (des) composant(s) du système de base et du taux de ce(s) composant(s) dépend notamment de la matière organique devant être renforcée par les fils selon l'invention et de l'application envisagée. Dans le cas notamment où le système de base du mélange comprend au moins un premier et un second groupes de composant(s) susceptibles de copolymériser, les taux respectifs de ces groupes sont choisis en fonction de la polymérisation recherchée (il peut être intéressant par exemple d'avoir un excès de composant(s) de l'un des groupes afin de conserver certaines fonctions réactives libres après polymérisation en vue de l'association avec certaines matières organiques). Il est ainsi possible d'obtenir des fils revêtus d'une composition d'ensimage partiellement ou entièrement polymérisée. Le procédé selon l'invention permet à ce sujet une meilleure maîtrise des processus de polymérisation que les procédés recourant à un traitement thermique de polymérisation, les traitements thermiques favorisant en effet l'apparition de réactions parasites (par exemple des réactions de type oxydation non contrôlées et généralement non souhaitées).

Outre le(s) composant(s) participant essentiellement à la structure de l'ensimage polymérisé et éventuellement le(s) catalyseur(s), le mélange déposé sur les fils selon l'invention peut comprendre un ou des composants ne polymérisant pas dans le mélange mais susceptibles de polymériser avec un ou des composants d'une matrice destinée à être renforcée par les fils revêtus du mélange et/ou peut comprendre un ou plusieurs composants (désignés ci-après par additifs) apportés par l'une et/ou l'autre des compositions et conférant des propriétés particulières au mélange.

Notamment, le mélange comprend préférentiellement un ou plusieurs agents de couplage, à titre de composant(s) du système de base pour le(s) agent(s) de couplage intervenant dans la réaction de polymérisation et/ou à titre seulement d'additif(s) pour le(s) agent(s) de couplage n'intervenant pas dans la réaction de polymérisation. La proportion du ou des agents de couplage est comprise entre 0 et 25 % en poids du mélange et, de préférence, entre 5 et 20 % en poids du mélange. Ces agents de couplage sont généralement nécessaires pour que le mélange présente les fonctions d'une composition d'ensimage. Ils peuvent être choisis par exemple parmi les composants suivants : silanes tels que le gamma-glycidoxypropyltriméthoxysilane, le gamma-méthacryloxypropyl triméthoxysilane, le triméthoxysilane polyéthoxylé-propoxylé, le gamma-acryloxypropyltriméthoxysilane, le vinyl triméthoxysilane, le phényl-aminopropyl triméthoxysilane, le styrylaminoéthyl aminopropyl triméthoxy-silane, l'aminopropyl triéthoxysilane, le terbutyl carbamoyl propyl triméthoxysilane, etc. ; titanates, zirconates, siloxannes, etc.

Le mélange peut également comprendre, généralement à titre d'additif n'intervenant pas dans la réaction de polymérisation, au moins un agent de mise en oeuvre textile jouant essentiellement un rôle de lubrifiant, dans des proportions comprises entre 0 et 25 % en poids du mélange et, de préférence, inférieures ou égales à 20 % en poids. Les agents textiles lubrifiants sont dans de nombreux cas nécessaires pour que le mélange présente les fonctions d'une composition d'ensimage. ils peuvent être choisis par exemple parmi les composants suivants : esters gras, dérivés des glycols (notamment de l'éthylène ou du propylène glycol), tels qu'un palmitate d'isopropyle ou de cétyle, un stéarate d'isobutyle, un laurate de décyle, un adipate d'éthylène glycol, un polyéthylène glycol ou un polypropylène glycol de poids moléculaire inférieur à 2000, un stéarate d'isopropyle, etc.

Le mélange peut également comprendre au moins un agent filmogène jouant généralement un rôle d'agent de glissement et facilitant le fibrage, dans des proportions comprises entre 0 et 10 % en poids du mélange et, de préférence, inférieures ou égales à 5 % en poids. La présence de ce(s) agent(s) empêche un frottement important des filaments (par exemple sur des dispositifs ensimeurs) lorsque les filaments sont étirés à grande vitesse - plus de 40 m/s - et/ou lorsqu'ils sont très fins, ces agents étant cependant coûteux et pouvant entraîner une diminution des caractéristiques mécaniques des composites. Les agents filmogènes peuvent être choisis par exemple parmi les composants suivants : silicones, siloxannes ou polysiloxannes tels que le glycidyl(n)polydiméthyl siloxanne, l'alpha-oméga acryloxypolydiméthyl siloxanne, etc., dérivés de silicone tels que huile de silicone, etc.

Le mélange peut également comprendre au moins un agent d'adaptation aux matières à renforcer, dans le cas des matières cimentaires notamment.

Les fils de verre obtenus selon le procédé de la présente invention sont revêtus d'une composition d'ensimage comprenant au moins un système de base polymérisable à température ambiante, ce système de base comprenant au moins un groupe de composant(s) susceptible(s) d'homopolymériser à température ambiante et/ou comprenant au moins deux groupes de composant(s), les composants des deux groupes étant susceptibles de copolymériser à température ambiante, la composition d'ensimage comprenant également le cas échéant (si nécessaire) au moins un catalyseur et/ou un agent débloquant susceptible(s) de déclencher la réaction de polymérisation.

Comme indiqué précédemment, les fils obtenus présentent un revêtement polymérisé partiellement ou entièrement, ce revêtement étant généralement uniforme sur toute son épaisseur. Dans certains cas très particuliers et avec des moyens de dépôt adaptés, on peut cependant envisager d'avoir une polymérisation uniquement sur une certaine épaisseur de ce revêtement (par exemple à l'interface des deux compositions déposées).

Ces fils sont généralement collectés sous forme d'enroulements sur des supports en rotation. Quelle que soit la rapidité de la réaction de polymérisation, on observe généralement l'absence de collage excessif des fils entre eux au sein des enroulements, et ceci même pour des angles de croisure faibles inférieurs à 1.5°. Les fils obtenus selon l'invention sont aisément dévidables d'enroulements et aisément manipulables.

Les fils peuvent également être collectés sur des supports récepteurs en translation. Ils peuvent en effet être projetés par un organe servant également à les étirer, vers la surface de collecte se déplaçant transversalement à la direction des fils projetés en vue d'obtenir une nappe de fils continus entremêlés appelée « mat ». Ils peuvent également être coupés avant collecte par un organe servant également à les étirer.

Les fils obtenus selon l'invention peuvent ainsi se trouver sous différentes formes après collecte, notamment sous forme de bobines de fils continus (stratifils, gâteaux, cops, ...), sous forme de fils coupés, peuvent être assemblés sous forme de tresses, de rubans, de mats ou de réseaux, tissés ou non, etc. Les filaments de verre formant ces fils peuvent présenter un diamètre compris entre 5 et 30 microns et le verre utilisé pour réaliser ces filaments peut être n'importe quel verre connu dans la réalisation de fils de renforcement : verre E, verre AR (alcali-résistant), etc.

Les fils peuvent être associés avantageusement à différentes matières à renforcer en vue de la réalisation de pièces composites présentant de bonnes propriétés mécaniques. Les composites sont avantageusement obtenus par association d'au moins des fils de verre selon l'invention et d'au moins une matière organique et/ou inorganique, le taux de verre au sein de ces composites étant généralement compris entre 30 et 75 % en poids.

Les exemples suivants illustrent la présente invention sans toutefois la limiter.

### EXEMPLE 1

Des filaments de 14 microns de diamètre obtenus par étirage de filets de verre fondu sont revêtus de la première composition stable suivante, exprimée en pourcentages pondéraux par rapport au mélange des première et seconde compositions déposées :

### Composants (premier groupe) du système de base de masse moléculaire inférieure à 750 :

- triméthylolpropane triglycidyl éther⁽¹⁾ 20.0 %
- diglycidyl éther du cyclohexane diméthanol⁽²⁾ 15.0 %
- crésyl glycidyl éther⁽³⁾ 18.0 %

La viscosité de cette composition (ainsi que des compositions suivantes) est mesurée sur un appareil de type SOFRASER (Mivi 4000) commercialisé par la société SOFRASER.

La viscosité obtenue pour cette composition est de 44 cP à 20°C (ce qui correspond à une viscosité de l'ordre de 15 à 30 cP à la température de dépôt qui est de l'ordre de 40 à 60°C dans cet exemple).

Les filaments sont ensuite revêtus de la seconde composition stable suivante, exprimée en pourcentages pondéraux par rapport au mélange des première et seconde compositions déposées :

### Composants (second groupe) du système de base de masse moléculaire inférieure à 750 :

- isophorone diamine 20.5 %

### Catalyseur :

- amine organométallique⁽⁴⁾ 0.5 %

### Additifs :

- agent textile lubrifiant à base d'esters d'acides gras et de tensioactifs⁽⁵⁾ 10.0 %
- agent de couplage gamma-méthacryloxypropyl triméthoxysilane⁽⁶⁾ 8.0 %
- agent de couplage 3-4,5-dihydroimidazol-1-yl-propyltriéthoxysilane⁽⁷⁾ 8.0 %

Cette composition présente une viscosité de 58 cP à 20°C (ce qui correspond à une viscosité de l'ordre de 13 à 25 cP à la température de dépôt de l'ordre de 40 à 60°C). Les filaments sont ensuite rassemblés en fils, lesquels sont bobinés sous forme de stratifils. Les fils obtenus présentent un titre (masse linéique) de 300 tex (g/km) environ et une perte au feu de 0.6 %.

Les fils obtenus sont aisément manipulables et présentent un revêtement uniforme sur toute leur longueur, la polymérisation (dans le cas présent il s'agit d'une copolymérisation) s'opérant en 18 h environ après mélange des compositions sur les filaments. Ces fils présentent une bonne résistance à l'abrasion et permettent de renforcer efficacement des matières organiques.

### EXEMPLE 2

Des filaments de 14 microns de diamètre obtenus par étirage de filets de verre fondu sont revêtus de la première composition stable suivante (pourcentages pondéraux par rapport au mélange des première et seconde compositions) :

### Composants (premier groupe) du système de base de masse moléculaire inférieure à 750 :

- diglycidyl éther du cyclohexane diméthanol⁽²⁾ 18.0 %
- crésyl glycidyl éther⁽³⁾ 18.0 %
- agent de couplage gamma-glycidoxypropyl triméthoxysilane⁽⁹⁾ 10.0 %

### Catalyseur (du second groupe) :

- dibenzoyle peroxyde⁽⁸⁾ 4.0 %

Cette composition présente une viscosité de 32 cP à 20°C (ce qui correspond à une viscosité de l'ordre de 15 à 25 cP à la température de dépôt de l'ordre de 40 à 60°C).

Les filaments sont ensuite revêtus de la seconde composition stable suivante (pourcentages pondéraux par rapport au mélange des première et seconde compositions) :

### Composants (second groupe) du système de base de masse moléculaire inférieure à 750 :

- triméthylolpropane triacrylateéthoxylé⁽¹⁰⁾ 15.0 %
- hexanediol diacrylate⁽¹¹⁾ 16.0 %
- agent de couplage gamma-méthacryloxypropyl triméthoxysilane⁽⁶⁾ 10.0 %

### Composants (troisième groupe) du système de base de masse moléculaire inférieure à 750 et catalyseur (du premier groupe) :

- 2-4,6-diméthylaminométhylphénol⁽¹²⁾ 9.0 %

Cette composition présente une viscosité de 24 cP à 20°C (ce qui correspond à une viscosité de l'ordre de 12 à 20 cP à la température de dépôt de l'ordre de 40 à 60°C). Les filaments sont ensuite rassemblés en fils, lesquels sont bobinés sous forme de stratifils. Les fils obtenus présentent un titre de 150 tex environ et une perte au feu de 0.5 %.

Les fils obtenus sont aisément manipulables et présentent un revêtement uniforme sur toute leur longueur, la polymérisation (dans le cas présent il s'agit d'une copolymérisation et d'homopolymérisations croisées) s'opérant en 72 h environ après mélange des compositions sur les filaments.

Ces fils sont extraits des enroulements pour mesurer leur résistance à l'abrasion. Cette résistance est évaluée en pesant la quantité de bourre formée après passage des fils sur une série de tiges. Pour différents fils obtenus selon le présent exemple, la quantité de bourre pesée est de l'ordre de 1 mg de bourre par kg de fil testé. Ceci montre que les fils obtenus présentent une bonne résistance à l'abrasion.

La force et la ténacité à la rupture en traction des fils obtenus sont également mesurées dans les conditions définies par la norme ISO 3341. La force à la rupture en traction mesurée sur 8 à 10 éprouvettes est d'environ 5 kgf (écart-type de 0.4 kgf) et la ténacité à la rupture en traction est d'environ 34 g/tex (écart-type de 3 g/tex). Ces fils permettent de renforcer efficacement des matières organiques.

### EXEMPLE 3

Des filaments de 14 microns de diamètre obtenus par étirage de filets de verre fondu sont revêtus de la première composition stable suivante (pourcentages pondéraux par rapport au mélange des première et seconde compositions) :

### Composants (premier groupe) du système de base de masse moléculaire inférieure à 750 :

- triméthylolpropane triglycidyl éther⁽¹⁾ 30.0 %
- diglycidyl éther du 1,4 butanediol⁽¹³⁾ 15.0 %
- alkyl C₁₂-C₁₄ monoglycidyléther⁽¹⁴⁾ 15.0 %

Cette composition présente une viscosité de 68 cP à 20°C (ce qui correspond à une viscosité de l'ordre de 20 à 40 cP à la température de dépôt de l'ordre de 40 à 60°C).

Les filaments sont ensuite revêtus de la seconde composition stable suivante (pourcentages pondéraux par rapport au mélange des première et seconde compositions) :

### Composants (second groupe) du système de base de masse moléculaire inférieure à 750 :

- agent de couplage triméthoxysilylpropylaminopropyl triméthoxysilane⁽¹⁵⁾ 10.0 %
- mélange de benzène 1,3 diméthanamine, de triméthylhexane éthylènediamine et de p-tertiobutyl phénol⁽¹⁶⁾ 12.0 %

### Additifs :

- agent de couplage phénylaminopropyltriméthoxysilane⁽¹⁷⁾ 8.0 %
- agent textile lubrifiant à base d'esters d'acides gras et de tensioactifs⁽⁵⁾ 10.0 %

Cette composition présente une viscosité de 56 cP à 20°C (ce qui correspond à une viscosité de l'ordre de 15 à 30 cP à la température de dépôt de l'ordre de 40 à 60°C). Les filaments sont ensuite rassemblés en fils, lesquels sont bobinés sous forme de stratifils. Les fils obtenus présentent un titre de 307 tex environ et une perte au feu de 0.6 %.

Les fils obtenus sont aisément manipulables et présentent un revêtement uniforme sur toute leur longueur, la polymérisation (dans le cas présent il s'agit d'une copolymérisation) s'opérant en 36 h environ après mélange des compositions sur les filaments.

La résistance à l'abrasion des fils est mesurée comme dans l'exemple 2. Pour différents fils selon le présent exemple, la quantité de bourre pesée est de l'ordre de 8 mg de bourre par kg de fil testé. Ceci montre que les fils obtenus présentent une bonne résistance à l'abrasion.

La force et la ténacité à la rupture en traction des fils obtenus sont également mesurées comme dans l'exemple 2. La force à la rupture en traction mesurée est d'environ 16 kgf (écart-type de 0.9 kgf) et la ténacité à la rupture en traction est d'environ 50 g/tex (écart-type de 3 g/tex). Ces fils permettent de renforcer efficacement des matières organiques.

### EXEMPLE 4

Des filaments de 14 microns de diamètre obtenus par étirage de filets de verre fondu sont revêtus de la première composition stable suivante (pourcentages pondéraux par rapport au mélange des première et seconde compositions) :

### Composants (premier groupe) du système de base de masse moléculaire inférieure à 750 :

- triméthylolpropane triglycidyl éther⁽¹⁸⁾ 30.0 %
- diglycidyl éther du 1,4 butanediol⁽¹³⁾ 10.0 %
- alkyl C₁₂-C₁₄ monoglycidyléther⁽¹⁴⁾ 10.0 %

Cette composition présente une viscosité de 68 cP à 20°C (ce qui correspond à une viscosité de l'ordre de 20 à 40 cP à la température de dépôt de l'ordre de 40 à 60°C).

Les filaments sont ensuite revêtus de la seconde composition stable suivante (pourcentages pondéraux par rapport au mélange des première et seconde compositions) :

### Composants (second groupe) du système de base de masse moléculaire inférieure à 750 :

- agent de couplage triméthoxysilylpropylaminopropyl triméthoxysilane⁽¹⁵⁾ 6.0 %
- mélange de benzène 1,3 diméthanamine, de triméthylhexane éthylènediamine et de p-tertiobutyl phénol⁽¹⁶⁾ 12.0 %
- N-aminoéthyl-pipérazine 10.0 %

### Catalyseur :

- 2-4,6-diméthylaminométhylphénol⁽¹²⁾ 2.0 %

### Additifs :

- agent de couplage gamma-méthacryloxypropyl triméthoxysilane⁽⁶⁾ 12.0 %
- agent textile lubrifiant à base d'huile minérale et de tensioactif⁽¹⁹⁾ 8.0 %

Cette composition présente une viscosité de 36 cP à 20°C (ce qui correspond à une viscosité de l'ordre de 15 à 25 cP à la température de dépôt de l'ordre de 40 à 60°C). Les filaments sont rassemblés en fils, lesquels sont bobinés sous forme de stratifils. Les fils obtenus présentent un titre de 300 tex environ et une perte au feu de 0.6 %.

Les fils obtenus sont aisément manipulables et présentent un revêtement uniforme sur toute leur longueur, la polymérisation (dans le cas présent il s'agit d'une copolymérisation) s'opérant en 12 h environ après mélange des compositions sur les filaments.

La résistance à l'abrasion des fils est mesurée comme dans l'exemple 2. La quantité de bourre pesée est de l'ordre de 3 mg de bourre par kg de fil testé. Ceci montre que les fils obtenus présentent une bonne résistance à l'abrasion.

La force et la ténacité à la rupture en traction des fils obtenus sont également mesurées comme dans l'exemple 2. La force à la rupture en traction mesurée est d'environ 11 kgf (écart-type de 0.8 kgf) et la ténacité à la rupture en traction est d'environ 38 g/tex (écart-type de 3 g/tex). Ces fils permettent de renforcer efficacement des matières organiques.

### EXEMPLE 5

Des filaments de 14 microns de diamètre obtenus par étirage de filets de verre fondu sont revêtus de la première composition stable suivante (pourcentages pondéraux par rapport au mélange des première et seconde compositions) :

### Composants (premier groupe) du système de base de masse moléculaire inférieure à 750 :

- diglycidyl éther du 1,4 butanediol⁽¹³⁾ 40.0 %
- alkyl C₁₂-C₁₄ monoglycidyléther⁽¹⁴⁾ 15.0 %

Cette composition présente une viscosité de 40 cP à 20°C (ce qui correspond à une viscosité de l'ordre de 15 à 30 cP à la température de dépôt de l'ordre de 40 à 60°C)..

Les filaments sont ensuite revêtus de la seconde composition stable suivante (pourcentages pondéraux par rapport au mélange des première et seconde compositions) :

### Composants (second groupe) du système de base de masse moléculaire inférieure à 750 :

- mélange de benzène 1,3 diméthanamine, de triméthylhexane éthylènediamine et de p-tertiobutyl phénol⁽¹⁶⁾ 10.0 %

### Catalyseur :

- 2-4,6-diméthylaminométhylphénol⁽¹²⁾ 2.0 %

### Additifs :

- agent de couplage gamma-méthacryloxypropyl triméthoxysilane⁽⁶⁾ 19.0 %
- agent textile lubrifiant à base d'huile minérale et de tensioactif⁽¹⁹⁾ 8.0 %
- agent textile lubrifiant à base de dérivés paraffiniques et de tensioactifs⁽²⁰⁾ 6.0 %

Cette composition présente une viscosité de 38 cP à 20°C (ce qui correspond à une viscosité de l'ordre de 25 à 35 cP à la température de dépôt de l'ordre de 40 à 60°C). Les filaments sont rassemblés en fils, lesquels sont bobinés sous forme de stratifils. Les fils obtenus présentent un titre de 316 tex environ et une perte au feu de 0.55 %.

Les fils obtenus sont aisément manipulables et présentent un revêtement uniforme sur toute leur longueur, la polymérisation (dans le cas présent il s'agit d'une copolymérisation) s'opérant en 48 h environ après mélange des compositions sur les filaments.

La résistance à l'abrasion des fils est mesurée comme dans l'exemple 2. La quantité de bourre pesée est de l'ordre de 0 mg de bourre par kg de fil testé. Ceci montre que les fils obtenus présentent une bonne résistance à l'abrasion.

La force et la ténacité à la rupture en traction des fils obtenus sont également mesurées comme dans l'exemple 2. La force à la rupture en traction est d'environ 14 kgf (écart-type de 0.4 kgf) et la ténacité à la rupture en traction est d'environ 42 g/tex (écart-type de 1 g/tex). Ces fils permettent de renforcer efficacement des matières organiques.

A partir des fils, des plaques composites à fils parallèles sont réalisées conformément à la norme NF 57152. La résine renforcée est une résine polyester. Les propriétés mécaniques présentées par ces plaques, en flexion et en cisaillement, sont mesurées respectivement selon les normes ISO 178 et ISO 4585, avant vieillissement et après immersion de ces plaques dans l'eau à 98°C pendant 24 h. La contrainte à la rupture en flexion, pour un taux de verre au sein du composite de l'ordre de 69 % en poids, est d'environ 1256 MPa (écart-type de 44 MPa) avant vieillissement et d'environ 785 MPa (écart-type de 27 MPa) après vieillissement, la contrainte à la rupture en flexion, pour un taux de verre ramené à 100 % en poids, est d'environ 2346 MPa (écart-type de 82 MPa) avant vieillissement et d'environ 1465 MPa (écart-type de 51 MPa) après vieillissement et la contrainte à la rupture en cisaillement, pour un taux de verre au sein du composite de l'ordre de 69 % en poids, est d'environ 67,5 MPa (écart-type de 1,5 MPa) avant vieillissement et d'environ 33 MPa (écart-type de 1 MPa) après vieillissement. De telles propriétés mécaniques sont particulièrement bonnes.

Les fils de verre selon l'invention peuvent servir à diverses applications, par exemple à des applications textiles telles que la fabrication de chaînes par ourdissage, ou directement à des applications de renforcement telles que le renforcement de matières organiques (par exemple des matières plastiques) ou inorganiques (par exemple des matières cimentaires pour obtenir des produits composites).
(1) Commercialisé sous la référence « Heloxy 5048 » par la Société SHELL
(2) Commercialisé sous la référence « Heloxy 107 » par la Société SHELL
(3) Commercialisé sous la référence « Heloxy 62 » par la Société SHELL
(4) Commercialisé sous la référence « DY 071 » par la Société CIBA-GEIGY
(5) Commercialisé sous la référence « Nopcostat FT 504 » par la Société HENKEL
(6) Commercialisé sous la référence « Silquest A 174 » par la Société OSi
(7) Commercialisé sous la référence « Dynasilan IMEO » par la Société HÜLS
(8) Commercialisé sous la référence « Lucidol CH 50 » par la Société AKZO
(9) Commercialisé sous la référence « Silquest A 187 » par la Société OSi
(10) Commercialisé sous la référence « SR 454 » par la Société CRAY-VALLEY
(11) Commercialisé sous la référence « HDDA » par la Société U.C.B.
(12) Commercialisé sous la référence « Actiron NX 3 » par la Société PROTEX
(13) Commercialisé sous la référence « Heloxy 67 » par la Société SHELL
(14) Commercialisé sous la référence « DY 0391 » par la Société CIBA-GEIGY
(15) Commercialisé sous la référence « Silquest A 1170 » par la Société OSi
(16) Commercialisé sous la référence « Ancamine 2089 M » par la Société AIR PRODUCTS
(17) Commercialisé sous la référence « Silquest Y 9669 » par la Société OSi
(18) Commercialisé sous la référence « DY0396 » par la Société CIBA-GEIGY
(19) Commercialisé sous la référence « Lubronyl GF » par la Société RHONE-POULENC BEVALOID
(20) Commercialisé sous la référence « Rocoil 80 » par la Société LAMBERTI

## Revendications

1. Procédé de production de fils de verre de renforcement ensimés selon lequel on étire des filets de verre fondu, s'écoulant d'orifices disposés à la base d'une ou plusieurs filières, sous la forme d'une ou plusieurs nappes de filaments continus, puis on rassemble les filaments en un ou plusieurs fils que l'on collecte sur un ou plusieurs support(s) en mouvement, ledit procédé consistant à déposer une première composition stable, présentant une viscosité comprise entre 0.5 et 250 cP, à la surface des filaments, à déposer au moins une seconde composition stable amenée séparément de la première et présentant une viscosité comprise entre 0.5 et 300 cP à la surface des filaments ou du (des) fil(s), au plus tôt lors du dépôt de la première composition et au plus tard lors de la collecte du (des) fil(s), l'écart de viscosité entre les compositions déposées étant inférieur à 150 cP, le mélange des compositions déposées présentant en outre les fonctions d'une composition d'ensimage et étant apte à polymériser à température ambiante sans apport d'énergie supplémentaire, à des températures inférieures à 60°C.

2. Procédé selon la revendication 1, **caractérisé en ce que** le taux de chaque composition déposée représente, hors solvant, de 0.1 à 2 % du poids des filaments.

3. Procédé selon l'une des revendications 1 ou 2, **caractérisé en ce que** la première composition est déposée sur les filaments refroidis à une température inférieure à 90°C.

4. Procédé selon l'une des revendications 1 à 3, **caractérisé en ce que** la polymérisation du mélange s'opère au moins à 80 % en moins de 80 heures après mélange des compositions.

5. Procédé selon l'une des revendications 1 à 4, **caractérisé en ce que** la seconde composition est déposée sur les filaments au plus tard lors du rassemblement des filaments en fils.

6. Procédé selon l'une des revendications 1 à 5, **caractérisé en ce que** le rapport des taux en poids de la première et de la deuxième compositions sur les filaments ou fils est compris entre 1/10 et 10.

7. Procédé selon l'une des revendications 1 à 6, **caractérisé en ce que** chaque composition présente un taux de solvant inférieur à 5 % en poids.

8. Procédé selon l'une des revendications 1 à 7, **caractérisé en ce que** le mélange comprend au moins un système de base polymérisable à température ambiante, ce système de base comprenant au moins 60 % en poids de composants de masse moléculaire inférieure à 750 et comprenant au moins un groupe de composant(s) susceptible(s) d'homopolymériser à température ambiante et/ou au moins deux groupes de composant(s), les composants des deux groupes étant susceptibles de copolymériser à température ambiante.

9. Procédé selon la revendication 8, **caractérisé en ce que** le mélange de compositions comprend, en plus du système de base, au moins un amorceur favorisant la polymérisation de tout ou partie du (des) composant(s) du système de base.

10. Procédé selon l'une des revendications 8 ou 9, **caractérisé en ce que** le système de base comprend au moins un premier groupe de composant(s) susceptible(s) d'homopolymériser à température ambiante et un second groupe de composant(s) susceptible(s) d'homopolymériser à température ambiante, le mélange comprenant en outre au moins un premier amorceur favorisant l'homopolymérisation du (des) composant(s) du premier groupe et au moins un second amorceur favorisant l'homopolymérisation du(des) composant(s) du second groupe.

11. Procédé selon l'une des revendications 8 à 10, **caractérisé en ce que** le système de base comprend au moins un premier groupe de composant(s) et un second groupe de composant(s) susceptible(s) de copolymériser à température ambiante avec le(s) composant(s) du premier groupe.

12. Procédé selon l'une des revendications 1 à 11, **caractérisé en ce que** le mélange comprend au moins un agent de couplage, la proportion du ou des agents de couplage étant comprise entre 0 et 25 % en poids du mélange.

13. Procédé selon l'une des revendications 1 à 12, **caractérisé en ce que** le mélange comprend au moins un agent filmogène, dans des proportions comprises entre 0 et 10 % en poids du mélange.

14. Procédé selon l'une des revendications 1 à 13, **caractérisé en ce que** le mélange comprend au moins un agent textile lubrifiant, dans des proportions comprises entre 0 et 25 % en poids du mélange.

## Claims

1. Method for producing sized reinforcement glass fibres, involving drawing threads of molten glass that flow out of holes disposed in the bottom of one or more dies, in the form of one or more yarns of continuous filaments, and then gathering the filaments into one or more fibres which are captured on one or more moving supports, said method comprising depositing a first stable composition having a viscosity of between 0.5 and 250 cP onto the surface of the filaments, depositing at least a second stable composition supplied separately from the first and having a viscosity of between 0.5 and 300 cP onto the surface of the filaments of the fibre or fibres, no earlier than when the first composition is being deposited and no later than when the fibre or fibres are being captured, the difference in viscosity between the deposited compositions being less than 150 cP, the mix of deposited compositions furthermore exhibiting the properties of a sizing composition and being capable of polymerising at ambient temperatures below 60°C without any additional energy being supplied.

2. Method according to claim 1, **characterised in that** the proportion of each deposited composition, less solvent, represents from 0.1 to 2 % by weight of the filaments.

3. Method according to either of claims 1 and 2, **characterised in that** the first composition is deposited onto filaments that have been cooled to a temperature below 90°C.

4. Method according to any of claims 1 to 3, **characterised in that** at least 80% polymerisation of the mix takes less than 80 hours following the mixing of the compositions.

5. Method according to any of claims 1 to 4, **characterised in that** the second composition is deposited onto the filaments no later than when the filaments are being gathered into fibres.

6. Method according to any of claims 1 to 5, **characterised in that** the weight ratio of the first and second compositions to the filaments or fibres is between 1/10 and 10.

7. Method according to any of claims 1 to 6, **characterised in that** each composition contains less than 5% by weight solvent.

8. Method according to any of claims 1 to 7, **characterised in that** the mix includes at least one base system polymerisable at ambient temperature, said base system comprising at least 60 % by weight of constituents having a molar mass below 750 and comprising at least one group of constituents adapted to homopolymerise at ambient temperature and/or at least two groups of constituents, the constituents of both groups being adapted to copolymerise at ambient temperature.

9. Method according to claim 8, **characterised in that** in addition to the base system the mix of compositions includes at least one initiator promoting the polymerisation of all or some of the constituent(s) of the base system.

10. Method according to either of claims 8 and 9, **characterised in that** the base system comprises at least one first group of constituents adapted to homopolymerise at ambient temperature and a second group of constituents adapted to homopolymerise at ambient temperature, the mix furthermore including at least one first initiator promoting homopolymerisation of the constituent(s) of the first group and at least one second initiator promoting homopolymerisation of the constituent(s) of the second group.

11. Method according to any of claims 8 to 10, **characterised in that** the base system comprises at least one first group of constituents and a second group of constituents adapted to copolymerise at ambient temperature with the constituent(s) of the second group.

12. Method according to any of claims 1 to 11, **characterised in that** the mix includes at least one coupling agent, the proportion of coupling agent(s) making up between 0 and 25 % by weight of the mix.

13. Method according to any of claims 1 to 12, **characterised in that** the mix includes at least one film-forming agent, in proportions of between 0 and 10 % by weight of the mix.

14. Method according to any of claims 1 to 13, **characterised in that** the mix includes at least one lubricating textile agent, in proportions of between 0 and 25 % by weight of the mix.

## Patentansprüche

1. Verfahren zur Herstellung von mit Schlichte überzogenen gläsernen Verstärkungsfäden, gemäß welchem die Glasstrahlen, die aus im Boden einer oder mehrerer Spinndüsen angeordneten Öffnungen fließen, zur Form einer oder mehrerer endloser Filamentbahnen gezogen und anschließend die Filamente zu einem oder mehreren Fäden vereinigt werden, die auf einem oder mehreren sich bewegenden Trägern gesammelt werden, wobei das Verfahren darin besteht, eine erste stabile Zusammensetzung, die eine Viskosität von 0,5 bis 250 cP besitzt, auf die Oberfläche der Filamente aufzubringen, und mindestens eine zweite stabile Zusammensetzung, die getrennt von der ersten zugeführt wird und eine Viskosität von 0,5 bis 300 cP besitzt, auf die Oberfläche der Filamente oder des/der Fadens/Fäden frühesten während des Aufbringens der ersten Zusammensetzung und spätestens während des Sammelns des/der Fadens/Fäden aufzubringen, wobei die Differenz zwischen den Viskositäten der aufgebrachten Zusammensetzungen kleiner als 150 cP ist und das Gemisch der aufgebrachten Zusammensetzungen außerdem die Funktionen einer Schlichtezusammensetzung besitzt und in der Lage ist, bei Umgebungstemperatur bis zu einer Temperatur von unter 60 °C ohne zusätzliche Energiezufuhr zu polymerisieren.

2. Verfahren nach Anspruch 1, **dadurch gekennzeichnet, dass** der Anteil der aufgebrachten Zusammensetzungen ohne Lösungsmittel jeweils 0,1 bis 2 Gew.-% der Filamente ausmacht.

3. Verfahren nach Anspruch 1 oder 2, **dadurch gekennzeichnet, dass** die erste Zusammensetzung auf die auf eine Temperatur von unter 90 °C abgekühlten Filamente aufgebracht wird.

4. Verfahren nach einem der Ansprüche 1 bis 3, **dadurch gekennzeichnet, dass** die Polymerisation des Gemischs zu mindestens 80 % in weniger als 80 Stunden nach Vermischen der Zusammensetzungen stattfindet.

5. Verfahren nach einem der Ansprüche 1 bis 4, **dadurch gekennzeichnet, dass** die zweite Zusammensetzung spätestens während der Vereinigung der Filamente zu Fäden auf die Filarnente aufgebracht wird.

6. Verfahren nach einem der Ansprüche 1 bis 5, **dadurch gekennzeichnet, dass** das Verhältnis der Gewichtsanteile von erster zu zweiter Zusammensetzung auf den Filamenten oder Fäden 1/10 bis 10 beträgt.

7. Verfahren nach einem der Ansprüche 1 bis 6, **dadurch gekennzeichnet, dass** jede Zusammensetzung einen Lösungsmittelanteil von weniger als 5 Gew.-% besitzt.

8. Verfahren nach einem der Ansprüche 1 bis 7, **dadurch gekennzeichnet, dass** das Gemisch mindestens ein bei Umgebungstemperatur polymerisierbares Basissystem umfasst, das mindestens 60 Gew.-% Komponenten mit einer Molmasse von unter 750 und mindestens eine Gruppe aus einer oder mehreren Komponenten, die in der Lage sind, bei Umgebungstemperatur zu homopolymerisieren, und/oder mindestens zwei Gruppen aus einer oder mehreren Komponenten enthält, wobei die Komponenten der zwei Gruppen in der Lage sind, bei Umgebungstemperatur zu copolymerisieren.

9. Verfahren nach Anspruch 8, **dadurch gekennzeichnet, dass** das Zusammensetzungsgemisch außer dem Basissystem mindestens einen Initiator enthält, der die Polymerisation der gesamten Komponente/n des Basissystems oder eines Teils davon fördert.

10. Verfahren nach Anspruch 8 oder 9, **dadurch gekennzeichnet, dass** das Basissystem mindestens eine erste Gruppe aus einer oder mehreren Komponenten, die in der Lage sind, bei Umgebungstemperatur zu homopolymerisieren, und eine zweite Gruppe aus einer oder mehreren Komponenten, die in der Lage sind, bei Umgebungstemperatur zu homopolymerisieren, umfasst, wobei das Gemisch außerdem mindestens einen ersten Initiator, der die Homopolymerisation der Komponente/n der ersten Gruppe fördert, und mindestens einen zweiten Initiator, der die Homopolymerisation der Komponente/n der zweiten Gruppe fördert, enthält.

11. Verfahren nach einem der Ansprüche 8 bis 10, **dadurch gekennzeichnet, dass** das Basissystem mindestens eine erste Gruppe aus einer oder mehreren Komponenten und eine zweite Gruppe aus einer oder mehreren Komponenten, die in der Lage sind, bei Umgebungstemperatur mit der/den Komponente/n der ersten Gruppe zu copolymerisieren, umfasst.

12. Verfahren nach einem der Ansprüche 1 bis 11, **dadurch gekennzeichnet, dass** das Gemisch mindestens ein Haftmittel enthält, wobei der Anteil des/der Haftmittel/s zwischen 0 und 25 Gew.-% des Gemischs beträgt.

13. Verfahren nach einem der Ansprüche 1 bis 12, **dadurch gekennzeichnet, dass** das Gemisch mindestens ein filmbildendes Mittel mit einem Anteil von zwischen 0 und 10 Gew.-% des Gemischs enthält.

14. Verfahren nach einem der Ansprüche 1 bis 13, **dadurch gekennzeichnet, dass** das Gemisch mindestens ein textiles Gleitmittel mit einem Anteil von zwischen 0 und 25 Gew.-% des Gemischs enthält.
